# EUROPÄISCHE PATENTSCHRIFT

(11) **EP 2 542 811 B1**
(45) Veröffentlichungstag und Bekanntmachung des Hinweises auf die Patenterteilung: **09.04.2014**
(21) Anmeldenummer: 11706473.3
(22) Anmeldetag: 22.02.2011
(51) Int. Cl.: F16L 9/147, F16L 11/04, B32B 1/08, B32B 15/08, B32B 15/20, B32B 27/32

(54) **VERWENDUNG EINES ROHRES ZUM TRANSPORT VON REINEM WASSERSTOFF**
USE OF A PIPE FOR TRANSPORTING PURE HYDROGEN
UTILISATION D'UN TUBE POUR LE TRANSPORT D'HYDROGÈNE PUR

(30) Priorität: 01.03.2010 DE 102010009796
(43) Veröffentlichungstag der Anmeldung: 09.01.2013
(73) Patentinhaber: Rehau AG + Co, 95111 Rehau (DE)
(72) Erfinder: STADTHALTER, Peter, 96152 Burghaslach (DE)
(86) Internationale Anmeldenummer: PCT/EP2011/000846
(87) Internationale Veröffentlichungsnummer: WO 2011/107225

(56) Entgegenhaltungen:
- EP-A1- 0 026 421
- EP-A2- 1 113 208
- EP-A2- 1 184 550
- EP-A2- 1 197 699
- EP-A2- 1 743 761
- DE-A1- 19 731 580
- DE-U1- 20 014 466
- US-A1- 2006 213 569

## Beschreibung

Die Erfindung betrifft die Verwendung eines Rohres zum Transport von reinem Wasserstoff. Dem Transport von reinem Wasserstoff kommt eine immer größer werdende Bedeutung zu. Vielfach wird reiner Wasserstoff als der Energieträger der Zukunft angesehen. Die Erzeugung von reinem Wasserstoff ist mit Hilfe regenerativer Energiequellen, z.B. Fotovoltaik, Windkraft etc., möglich. Da bei der Verbrennung von Wasserstoff kein klimaschädliches Kohlendioxid entsteht, ist die Wasserstoff-Energiewirtschaft - eine regenerative Stromerzeugung zur Herstellung von reinem Wasserstoff vorausgesetzt - CO₂-neutral. Ein großer Vorteil von Wasserstoff besteht insbesondere darin, dass er eine sehr hohe Energiedichte besitzt. Entsprechend weisen z.B. wasserstoffbetriebene Fahrzeuge in dieser Hinsicht deutliche Vorteile gegenüber batteriebetriebenen Elektrofahrzeugen auf.

Die EP 1 197 699 A2 betrifft einen Schlauch, welcher für den Transport von Wasserstoff aus einem Tank hin zur Brennstoffzelle eines Fahrzeugs zum Einsatz kommt. Entsprechend ist der Transport von Wasserstoff nur über eine vergleichsweise sehr kurze Wegstrecke beschrieben. Die Entgegenhaltung offenbart außerdem kein Rohr mit einer Innenschicht aus peroxidisch vernetztem Polyethylen (PE-Xa).

Auch die EP 1 184 550 A2 offenbart einen Schlauch, welcher in einem wasserstoffgetriebenen Fahrzeug zum Transport des Wasserstoffs von einem Tank zur Brennstoffzelle dient. Dies hat ebenfalls mit dem Transport von Wasserstoff über weite Strecken zum Aufbau einer Wasserstoff- Energiewirtschaft nichts zu tun. Überdies ist auch in dieser Entgegenhaltung keine Innenschicht aus PE-Xa offenbart.

Die US 2006/0213569 beschreibt einen Schlauch, welcher vorzugsweise zum Transport von Brennstoffen, beispielsweise Wasserstoff, in Fahrzeugen oder Transportmaschinen oder alternativ zum Transport von Kühlmedien in Klimaanlagen und dergleichen eingesetzt wird (vgl. Abs. 36). Dies liegt ebenfalls deutlich entfernt vom Transport von Wasserstoff über lange Wegstrecken zum Aufbau einer Wasserstoff-Energiewirtschaft. Darüber hinaus zeigt auch diese Entgegenhaltung keine PE-Xa-Innenschicht.

Auch die EP 1 113 208 A2 offenbart einen Schlauch zum Transport von Wasserstoff in einem Kraftfahrzeug. Es wird eine Innenschicht aus einem Silan-vernetzten Polyethylen offenbart, welches einem PE-Xb entspricht. Die erfindungsgemäße Verwendung eines peroxidisch vernetzten Polyethylens (PE-Xa) ist folglich in dieser Entgegenhaltung ebenso wenig beschrieben wie der Transport von Wasserstoff über weite Wegstrecken zum Aufbau einer Wasserstoff-Energiewirtschaft.

Zum Aufbau einer Wasserstoff-Wirtschaft ist es erforderlich, den Wasserstoff über ggf. weite Strecken zu transportieren. Hierbei besteht das Problem, dass molekularer Wasserstoff aufgrund seiner sehr kleinen Moleküle leicht durch die Wandung von Transportrohren hindurch diffundieren kann. So sind z.B. Polyethylenrohre, wie sie u.a. zum Transport von Erdgas eingesetzt werden, aufgrund der Durchlässigkeit von PE gegenüber Wasserstoff für diesen Einsatzzweck ungeeignet. Im Stand der Technik hat sich daher die Verwendung von Metallrohren zum Transport von Wasserstoff etabliert. Metallrohre sind jedoch vergleichsweise teuer und besitzen weiterhin den Nachteil, dass metallische Werkstoffe unter bestimmten Voraussetzungen eine Wechselwirkung mit Wasserstoff eingehen. Hierdurch kann eine Schädigung des Metallrohres verursacht werden, so dass die dauerhafte Dichtigkeit nicht mehr gewährleistet ist. Metallrohre können überdies, insbesondere bei einer Verlegung im Erdreich, auch von außen korrodieren. Weitere Nachteile sind die hohen Transport- und Verlegekosten aufgrund des hohen Gewichts sowie die starre Struktur von Metallrohren. Ferner ist die Verbindungstechnik bei Metallrohren aufwendig.

Vor diesem Hintergrund liegt der Erfindung die Aufgabe zugrunde, ein Rohr zum Transport von reinem Wasserstoff anzugeben, welches sich durch eine hohe Diffusionsdichtigkeit, dauerhafte Beständigkeit und durch einen niedrigen Preis auszeichnet.

Diese Aufgabe wird erfindungsgemäß gelöst durch die Verwendung eines Rohres mit
- einer Kunststoff-Innenschicht aus PE-Xa,
- einer Metall-Zwischenschicht und
- einer Kunststoff-Außenschicht
zum Transport von reinem Wasserstoff über weite Strecken zum Aufbau einer Wasserstoff-Energiewirtschaft. Der Erfindung liegt die überraschende Erkenntnis zugrunde, dass durch den hybriden Aufbau des erfindungsgemäß verwendeten Rohres eine vergleichsweise dünne Metall-Zwischenschicht ausreichend ist, um die Diffusionsdichtigkeit gegenüber dem Wasserstoff zu gewährleisten. Darüber hinaus findet erfindungsgemäß keine, bzw. lediglich eine reduzierte Beaufschlagung der Metall-Zwischenschicht mit dem Wasserstoff statt, da die Innenwandung des Rohres von der Kunststoff-Innenschicht gebildet wird. Das erfindungsgemäß verwendete Rohr gewährleistet somit dauerhaft einen sicheren Transport von Wasserstoff ohne nennenswerte Verluste und weist dennoch vergleichsweise niedrige Herstellungskosten und ferner auch ein relativ niedriges Gewicht auf. Ein weiterer Vorteil besteht darin, dass das erfindungsgemäße Rohr eine gewisse Flexibilität aufweist und daher auf eine Trommel aufgewickelt werden kann, was den Transport und die Verlegung desselben erheblich vereinfacht.

Vorzugsweise wird Wasserstoff mit einer molaren Konzentration von mindestens 99 %, vorzugsweise mindestens 99,5 %, besonders bevorzugt mindestens 99,9 % transportiert. Der Druck, unter dem der Wasserstoff beim Transport durch das Rohr steht, beträgt beispielsweise 3 bis 20 bar, vorzugsweise 4 bis 10 bar, insbesondere 5 bis 7 bar. Hierbei ist sowohl eine oberirdische als auch alternativ eine unterirdische Verlegung des den Wasserstoff führenden Rohres möglich.

Die Metall-Zwischenschicht kann beispielsweise aus Aluminium oder einer Aluminiumlegierung bestehen und ist korrosionsbeständig gegenüber Wasserstoff. Im Rahmen der Erfindung liegt es, dass die Metall-Zwischenschicht aus einem Metallband besteht, das um die Kunststoff-Innenschicht helixförmig gewickelt und ggf. in den Überlappungsbereichen der Wicklung mit sich selbst verschweißt ist. Denkbar ist aber auch ein Aufdampfen der Metallschicht, insbesondere bei sehr dünnen Schichtdicken. Die Kunststoff-Innenschicht besteht aus vernetztem Polyethylen PE-Xa Die Kunststoff-Innenschicht wird vorzugsweise als selbst tragender Inliner ausgebildet, wobei das Polyethylen der DIN 16892 entspricht.

Die Kunststoff-Außenschicht kann ebenfalls aus Polyethylen, insbesondere zwecks Kennzeichnung von brennbaren Gasen gelb (z.B. RAL 1021) eingefärbtem Polyethylen, bestehen. Als alternative Materialien sind hier Polypropylen oder Polyamid zu nennen, die natürlich analog eingefärbt sein können. Die Kunststoff-Außenschicht dient als Schutz, insbesondere als Korrosionsschutz und mechanischer Schutz, der Metall-Zwischenschicht.

Die Dicke der Kunststoff-Innenschicht beträgt in Abhängigkeit der gewünschten Druckstufe vorzugsweise 2 bis 50 mm, insbesondere 2 bis 20 mm, z.B. 2 bis 5 mm, während die Dicke der Metall-Zwischenschicht vorzugsweise 20 bis 2000 µm, insbesondere 50 bis 1000 µm, z.B. 200 bis 500 µm und die Dicke der Kunststoff-Außenschicht zweckmäßigerweise 200 bis 5000 µm, insbesondere 200 bis 2000 µm, zB 200 bis 500 µm beträgt. Der Innendurchmesser des Rohres kann 10 bis 500 mm, insbesondere 20 bis 200 mm, zB 40 bis 150 mm, betragen.

Im Rahmen der Erfindung liegt es ferner, dass das Rohr zusätzlich eine oder mehrere weitere Zwischenschichten aufweist. Hierbei kann es sich insbesondere um eine Haftvermittlerschicht zwischen der Kunststoff-Innenschicht und der Metall-Zwischenschicht bzw. zwischen der Metall-Zwischenschicht und der Kunststoff-Außenschicht handeln.

Zur Verbindung einzelner Rohre werden Press-Fittinge, insbesondere metallische Press-Fittinge, eingesetzt, wie zB aus DE 38 36 124 C3 bekannt. Diese Fittinge bestehen aus entzinkungsbeständigem, gegenüber Wasserstoff korrosionsbeständigem Messing nach DIN EN 12164 bis DIN EN 12168 Grad A (höchste Anforderungsstufe). Die Schiebehülsen, die zur Fixierung der Rohrenden auf den Fittingen dienen und entsprechend nicht mit dem Wasserstoff in Berührung kommen, bestehen aus Messing, insbesondere thermisch entspanntem Standardmessing, z.B. CuZn39/Pb3/F43 nach DIN EN 1268. Alternativ können auch Fittinge und Schiebehülsen aus Kunststoff eingesetzt werden, wie zB in DE 20 2008 003 353 U1 beschrieben.

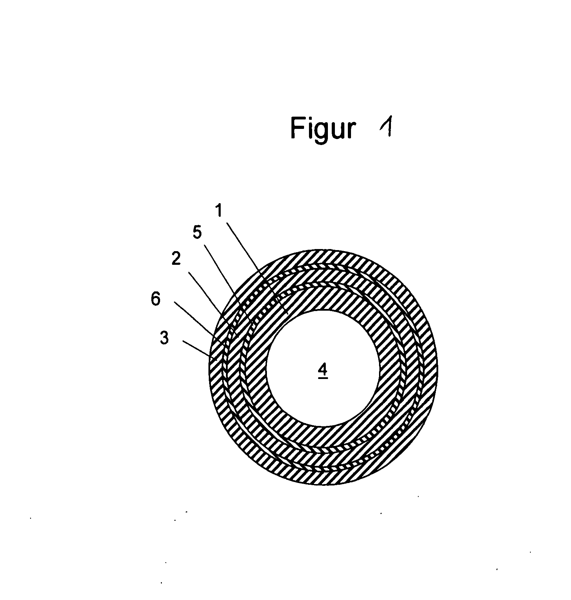

Im Folgenden wird die Erfindung anhand einer lediglich ein Ausführungsbeispiel darstellenden Zeichnung ausführüch erläutert. Die einzige Figur zeigt schematisch einen Querschnitt durch ein erfindungsgemäß verwendetes Rohr zum Transport von reinem Wasserstoff. Der Figur ist zu entnehmen, dass das Rohr eine Kunststoff-Innenschicht 1, eine Metall-Zwischenschicht 2 und eine Kunststoff-Außenschicht 3 aufweist. In dem Rohr wird reiner Wasserstoff 4 transportiert, insbesondere Wasserstoff mit einer molaren Konzentration von mindestens 99 %. Der Druck, mit dem der Wasserstoff 4 im Ausführungsbeispiel durch das Rohr geleitet wird, beträgt 5 - 7 bar. Die Metall-Zwischenschicht 2 besteht aus Aluminium, während die Kunststoff-Innenschicht 1 als selbst tragender Inliner aus Polyethylen gemäß DIN 16892 ausgebildet ist. Hierbei kommt ein vernetztes Polyethylen PE-Xa zum Einsatz. Die Kunststoff-Außenschicht 3 besteht ebenfalls aus Polyethylen und ist gemäß DIN 2403 zur Kennzeichnung eines brennbaren Gases gelb (z.B. RAL 1021) eingefärbt.

Die Dicke der Kunststoff-Innenschicht 1 beträgt im Ausführungsbeispiel 2 bis 5 mm, die Dicke der Metall-Zwischenschicht 2 aus der Aluminium 200 bis 500 µm und die Dicke der Kunststoff-Außenschicht 3 200 bis 500 µm.

Der Figur ist ferner zu entnehmen, dass das Rohr zusätzlich weitere Zwischenschichten 5, 6 aufweist. So ist einerseits zwischen der Kunststoff-Innenschicht 1 und der Metall-Zwischenschicht 2 eine Haftvermittlerschicht 5 und andererseits zwischen der Metall-Zwischenschicht 2 und der Kunststoff-Außenschicht 3 ebenfalls eine Haftvermittlerschicht 6 vorgesehen.

## Patentansprüche

1. Verwendung eines Rohres mit
- einer Kunststoff-Innenschicht aus PE-Xa
- einer Metall-Zwischenschicht und
- einer Kunststoff-Außenschicht
zum Transport von reinem Wasserstoff über weite Strecken zum Aufbau einer Wasserstoff-Energiewirtschaft.

2. Verwendung nach Anspruch 1, **dadurch gekennzeichnet, dass** mehrere Rohre verwendet werden, die mittels Pressfittingen miteinander verbunden sind.

3. Verwendung nach Anspruch 2, **dadurch gekennzeichnet, dass** die Press-Fittinge aus Kunststoff oder Metall, insbesondere korrosionsbeständigem Messing, bestehen.

4. Verwendung nach einem der Ansprüche 1 bis 3, **dadurch gekennzeichnet, dass** das Rohr ober- oder unterirdisch verlegt ist.

5. Verwendung nach einem der Ansprüche 1 bis 4, **dadurch gekennzeichnet, dass** das Rohr derart flexibel ist, dass es auf eine Trommel aufwickelbar ist.

6. Verwendung nach einem der Ansprüche 1 bis 5, **dadurch gekennzeichnet, dass** die Kunstoff-Außenschicht aus Polyethylen, Polypropylen oder Polyamid besteht und vorzugsweise - zur Kennzeichnung von brennbaren Gasen - gelb eingefärbt ist.

7. Verwendung nach einem der Ansprüche 1 bis 6, **dadurch gekennzeichnet, dass** der Innendurchmesser des Rohres 10 bis 500 mm, insbesondere 20 bis 200 mm, z.B. 40 bis 150 mm beträgt.

8. Verwendung nach einem der Ansprüche 1 bis 7, **dadurch gekennzeichnet, dass** Wasserstoff mit einer molaren Konzentration von mindestens 99 %, vorzugsweise mindestens 99,5 %, besonders bevorzugt mindestens 99,9 % transportiert wird.

9. Verwendung nach einem der Ansprüche 1 bis 8, **dadurch gekennzeichnet, dass** der Wasserstoff bei einem Druck von 3 bis 20 bar, vorzugsweise 4 bis 10 bar, besonders bevorzugt 5 bis 7 bar transportiert wird.

10. Verwendung nach einem der Ansprüche 1 bis 9, **dadurch gekennzeichnet, dass** die Metall-Zwischenschicht aus Aluminium oder einer Aluminiumlegierung besteht.

11. Verwendung nach einem der Ansprüche 1 bis 10, **dadurch gekennzeichnet, dass** die Dicke der Kunststoff-Innenschicht 2 bis 50 mm beträgt.

12. Verwendung nach einem der Anspruche 1 bis 11, **dadurch gekennzeichnet, dass** die Dicke der Metall-Zwischenschicht 20 bis 2000 µm beträgt.

13. Verwendung nach einem der Ansprüche 1 bis 12, **dadurch gekennzeichnet, dass** die Dicke der Kunststoff-Außenschicht 200 bis 5000 µm beträgt.

14. Verwendung nach einem der Ansprüche 1 bis 13, **dadurch gekennzeichnet, dass** das Rohr zusätzlich eine oder mehrere weitere Zwischenschichten aufweist.

15. Verwendung nach einem der Ansprüche 1 bis 14, **dadurch gekennzeichnet, dass** mit regenerativen Energiequellen erzeugter Wasserstoff transportiert wird.

## Claims

1. Use of a pipe having
- a plastic inner layer made of PE-Xa,
- a metal intermediate layer and
- a plastic outer layer
for transporting pure hydrogen over large distances to build up a hydrogen energy economy.

2. Use according to Claim 1, **characterized in that** use is made of a plurality of pipes connected to one another by means of press fittings.

3. Use according to Claim 2, **characterized in that** the press fittings consist of plastic or metal, in particular corrosion-resistant brass.

4. Use according to one of Claims 1 to 3, **characterized in that** the pipe is laid above ground or below ground.

5. Use according to one of Claims 1 to 4, **characterized in that** the pipe has such a flexibility that it can be wound onto a reel.

6. Use according to one of Claims 1 to 5, **characterized in that** the plastic outer layer consists of polyethylene, polypropylene or polyamide and - to identify combustible gases - is preferably coloured yellow.

7. Use according to one of Claims 1 to 6, **characterized in that** the internal diameter of the pipe is 10 to 500 mm, in particular 20 to 200 mm, e.g. 40 to 150 mm.

8. Use according to one of Claims 1 to 7, **characterized in that** hydrogen with a molar concentration of at least 99%, preferably at least 99.5% and particularly preferably at least 99.9% is transported.

9. Use according to one of Claims 1 to 8, **characterized in that** the hydrogen is transported at a pressure of 3 to 20 bar, preferably 4 to 10 bar and particularly preferably 5 to 7 bar.

10. Use according to one of Claims 1 to 9, **characterized in that** the metal intermediate layer consists of aluminium or an aluminium alloy.

11. Use according to one of Claims 1 to 10, **characterized in that** the thickness of the plastic inner layer is 2 to 50 mm.

12. Use according to one of Claims 1 to 11, **characterized in that** the thickness of the metal intermediate layer is 20 to 2000 µm.

13. Use according to one of Claims 1 to 12, **characterized in that** the thickness of the plastic outer layer is 200 to 5000 µm.

14. Use according to one of Claims 1 to 13, **characterized in that** the pipe additionally has one or more further intermediate layers.

15. Use according to one of Claims 1 to 14, **characterized in that** hydrogen produced by regenerative energy sources is transported.

## Revendications

1. Utilisation d'un tube avec
- une couche intérieure de matière plastique en PE-Xa,
- une couche intermédiaire de métal, et
- une couche extérieure de matière plastique,
pour le transport d'hydrogène pur sur de longues distances en vue de construire une production d'énergie à l'hydrogène.

2. Utilisation selon la revendication 1, **caractérisée en ce que** l'on utilise plusieurs tubes, qui sont reliés les uns aux autres au moyen de raccords pressés.

3. Utilisation selon la revendication 2, **caractérisée en ce que** les raccords pressés sont constitués de matière plastique ou de métal, en particulier de laiton résistant à la corrosion.

4. Utilisation selon l'une quelconque des revendications 1 à 3, **caractérisée en ce que** les tubes sont posés en pose aérienne ou en pose souterraine.

5. Utilisation selon l'une quelconque des revendications 1 à 4, **caractérisée en ce que** le tube est flexible, de telle manière qu'il puisse être enroulé sur un tambour.

6. Utilisation selon l'une quelconque des revendications 1 à 5, **caractérisée en ce que** la couche extérieure de matière plastique se compose de polyéthylène, de polypropylène ou de polyamide et est de préférence colorée en jaune - pour l'identification de gaz combustibles.

7. Utilisation selon l'une quelconque des revendications 1 à 6, **caractérisée en ce que** le diamètre intérieur du tube vaut 10 à 500 mm, en particulier 20 à 200 mm, par exemple 40 à 150 mm.

8. Utilisation selon l'une quelconque des revendications 1 à 7, **caractérisée en ce que** l'on transporte de l'hydrogène avec une concentration molaire d'au moins 99 %, de préférence d'au moins 99,5 %, de préférence encore d'au moins 99,9 %.

9. Utilisation selon l'une quelconque des revendications 1 à 8, **caractérisée en ce que** l'on transporte l'hydrogène à une pression de 3 à 20 bar, de préférence de 4 à 10 bar, de préférence encore de 5 à 7 bar.

10. Utilisation selon l'une quelconque des revendications 1 à 9, **caractérisée en ce que** la couche intermédiaire de métal est constituée d'aluminium ou d'un alliage d'aluminium.

11. Utilisation selon l'une quelconque des revendications 1 à 10, **caractérisée en ce que** l'épaisseur de la couche intérieure de matière plastique vaut 2 à 50 mm.

12. Utilisation selon l'une quelconque des revendications 1 à 11, **caractérisée en ce que** l'épaisseur de la couche intermédiaire de métal vaut 20 à 2000 µm.

13. Utilisation selon l'une quelconque des revendications 1 à 12, **caractérisée en ce que** l'épaisseur de la couche extérieure de matière plastique vaut 200 à 5000 µm.

14. Utilisation selon l'une quelconque des revendications 1 à 13, **caractérisée en ce que** le tube présente en outre une ou plusieurs autres couches intermédiaires.

15. Utilisation selon l'une quelconque des revendications 1 à 14, **caractérisée en ce que** l'on transporte de l'hydrogène produit avec des sources d'énergie à régénération.
